# EUROPÄISCHE PATENTSCHRIFT

(11) **EP 3 734 084 B1**
(45) Veröffentlichungstag und Bekanntmachung des Hinweises auf die Patenterteilung: **07.08.2024**
(21) Anmeldenummer: 20164079.4
(22) Anmeldetag: 19.03.2020
(51) Int. Cl.: F16B 2/22, F04D 29/60, F16B 7/04, F04D 29/40

(54) **VERBINDUNGSANORDNUNG**
CONNECTION ASSEMBLY
AGENCEMENT DE RACCORDEMENT

(30) Priorität: 29.04.2019 DE 102019206122
(43) Veröffentlichungstag der Anmeldung: 04.11.2020
(73) Patentinhaber: VOLKSWAGEN AG, 38440 Wolfsburg (DE)
(72) Erfinder: Fries, Holger, 38640 Goslar (DE); Lüders, Ralf, 31224 Peine (DE)

(56) Entgegenhaltungen:
- EP-A1- 0 310 369
- EP-A1- 0 765 281
- EP-A1- 1 378 701
- WO-A1-01/84003
- DE-A1- 102016 116 922
- GB-A- 2 287 998
- JP-A- 2017 187 073
- US-A1- 2001 040 377

## Beschreibung

Die Erfindung betrifft eine Verbindungsanordnung, zumindest umfassend ein erstes Bauteil und ein zweites Bauteil sowie einen Verbindungsring zur Verbindung der Bauteile. Bei den Bauteilen handelt es sich insbesondere um Komponenten einer Pumpe, insbesondere einer Wasserumwälzpumpe oder einer Nachlaufpumpe, die bevorzugt in einem Kühlkreislauf von Kraftfahrzeugen eingesetzt wird. Insbesondere sind erstes Bauteil und zweites Bauteil Bestandteil eines Gehäuses der Pumpe, z. B. Deckel und Restgehäuse, d. h. Deckel und Restgehäuse bilden insbesondere das gesamte Gehäuse.

Die im Kühlkreislauf eines Kraftfahrzeuges zum Einsatz kommende Wasserumwälz- bzw. Nachlaufpumpe ist in der Regel von zylindrischer Bauform. Bei den hohen Stückzahlen dieser Pumpen (mindestens 100.000 Stück pro Jahr, insbesondere mindestens 1.000.000 Stück pro Jahr) haben die Montagekosten einen entscheidenden Anteil an den Gesamtkosten zur Herstellung der Pumpen. Daher sind kostengünstige Montagetechniken anzustreben.

Bisher kommen übliche Fügetechnologien zum Einsatz (z. B. Verschraubung, Laserschweißen, Klemmung, Kleben). Dabei erfordert die Verschraubung z. B. Bauraum und zusätzliche Bauteile (Schrauben, u. U. Hülsen), das Laserschweißen benötigt spezielle Werkstoffe, exakte Geometrien (Nullspalt) und einen freien Strahlengang hin zum Ort der Schweißung. Die Klemmung geht mit hohen Montagekräften einher, die aber innerhalb der zu fügenden Baugruppe oft nicht abgestützt werden können. Die Klebung erfordert i. d. R. eine spezielle Oberflächenvorbehandlung und bedingt durch die Aushärtung erhöhte Taktzeiten. Schweißung, Klebung aber auch die Klemmung sind nur eingeschränkt bei Bauteilen bzw. Verbindungsanordnungen aus unterschiedlichen Werkstoffen (Metall/ Kunststoff) einsetzbar.

Aus der DE 10 2008 008 981 A1 ist eine Klemmspange zum Verbinden zweier Gehäuseteile eines Verdichtergehäuses bekannt. Die Klemmspange erstreckt sich entlang einer Umfangsrichtung um das Gehäuse herum und weist zueinander bewegbare Enden auf, über die die Klemmspange geöffnet oder geschlossen werden kann. Entlang der Erstreckung in Umfangsrichtung sind Spannsegmente vorgesehen, die mit Rändern an beiden Gehäuseteilen jeweils eine in axialer Richtung formschlüssige Verbindung bilden.

Aus der WO 97/16651 A1 ist eine Klemmhalterung zur Befestigung eines Deckels an einem Drosselklappenstutzen bekannt. Entlang der Umfangsrichtung sind eine Mehrzahl von Halteelementen vorgesehen, die sich jeweils mit Spannarmen hin zu Halteflächen am Deckel und am Stutzen erstrecken. Jedes Halteelement wird über eine eigene Haltesicherung gesichert.

Aus der EP 0 310 369 A1 ist eine Verbindungsvorrichtung bekannt. Dabei sind an zwei miteinander zu verbindenden Bauteilen sich entlang der axialen Richtung erstreckende Vorsprünge angeordnet, die entlang der Umfangsrichtung benachbart und abwechselnd zueinander angeordnet sind. Ein Ring 31 kann in einer umlaufenden Nut angeordnet werden.

Aufgabe der vorliegenden Erfindung ist es, die mit Bezug auf den Stand der Technik angeführten Probleme zumindest teilweise zu lösen. Insbesondere soll eine alternative Verbindungsform für eine Verbindungsanordnung vorgeschlagen werden. Diese soll insbesondere eine einfache Montage z. B. einer Pumpe ermöglichen, so dass bei den betrachteten hohen Stückzahlen ein großer Anteil der anfallenden Herstellungskosten eingespart werden kann.

Zur Lösung dieser Aufgaben trägt eine Verbindungsanordnung mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird eine Verbindungsanordnung vorgeschlagen, zumindest umfassend ein erstes Bauteil und ein zweites Bauteil sowie einen Verbindungsring zur Verbindung der Bauteile. Der Verbindungsring ist in einer Umfangsrichtung umlaufend geschlossen ausgebildet und erstreckt sich um beide Bauteile herum. Am ersten Bauteil ist entlang der Umfangsrichtung eine Mehrzahl von ersten Halteelementen und am zweiten Bauteil ist entlang der Umfangsrichtung eine Mehrzahl von zweiten Halteelementen angeordnet. Der Verbindungsring bildet mit den ersten Halteelementen eine gegenüber einer ersten axialen Richtung formschlüssige erste Verbindung und mit den zweiten Halteelementen eine gegenüber einer (der ersten axialen Richtung entgegengesetzten) zweiten axialen Richtung formschlüssige zweite Verbindung aus.

Der Verbindungsring weist keine Enden auf, sondern ist umlaufend geschlossen ausgeführt.

Das erste Bauteil und das zweite Bauteil sind bevorzugt zylindrisch ausgeführt.

Insbesondere erstreckt sich der Verbindungsring entlang der Umfangsrichtung entlang einer Kreisbahn oder entlang einer zumindest teilweise gekrümmten Bahn oder entlang mehrerer, gerader Abschnitte, die jeweils um einen Winkel zueinander geneigt angeordnet sind.

Formschlüssige Verbindungen entstehen insbesondere durch das Ineinandergreifen von mindestens zwei Fügeteilen. Dadurch können sich die Fügeteile auch ohne oder bei unterbrochener Kraftübertragung nicht lösen. Anders ausgedrückt ist bei einer formschlüssigen Verbindung das eine Fügeteil dem anderen im Weg (hier zumindest gegenüber der axialen Richtung).

Insbesondere bildet der Verbindungsring mit den Halteelementen sogenannte Clip- oder Schnappverbindungen aus.

Clip- bzw. Schnappverbindungen haben insbesondere bei der vorgeschlagenen Anwendung (hohe Stückzahl, Pumpe, zylindrische Bauteile) entscheidende Vorteile.

Für eine Clip- bzw. Schnappverbindung ist es erforderlich, dass (mindestens) ein Fügeteil aus einem dehnbaren Werkstoff besteht. Beim Fügen weicht das dehnbare Fügeteil z. B. durch das Auflaufen auf einen Keil aus und schnappt zum Ende der Montage hinter eine Kontur und realisiert einen Formschluss. Die notwendige Dehnbarkeit und Elastizität des dehnbaren Fügeteils basiert auf den Materialeigenschaften und einer geeigneten Geometrie. Prinzipbedingt verformt sich also das biegeelastische Fügeteil bei der Montage und verhakt sich anschließend lösbar oder unlösbar durch Formschluss mit dem Gegenfügeteil. Bestehen beide zu fügenden Fügeteile aus spröden Werkstoffen (z. B. Duroplast, Metallguss) oder aus Werkstoffen mit unzureichendem elastischen Deformationsanteil (z. B. Metall, welches "verbiegt") oder aber aus einem Elastomer mit einer sehr geringen Steifigkeit, so ist eine Clipverbindung nicht realisierbar.

Verfügt keines der beiden Fügepartner (hier z. B. das erste Bauteil und das zweite Bauteil) über die notwendige Dehnbarkeit, so kann ein drittes, dehnbares Element (hier der Verbindungsring) die gewünschte Clipverbindung realisieren. Der vorgeschlagene Verbindungsring wird dabei auf beide Fügepartner (also beide Bauteile) aufgeclipst und stellt somit die Verbindung der Bauteile her.

Insbesondere ist zwischen dem ersten Bauteil und dem zweiten Bauteil zumindest ein drittes Bauteil angeordnet, wobei sich der Verbindungsring entlang der axialen Richtung über das dritte Bauteil hinweg erstreckt. Insbesondere sind das erste Bauteil und das zweite Bauteil durch das dritte Bauteil also voneinander beabstandet angeordnet.

Insbesondere ist zwischen dem ersten Bauteil und dem zweiten Bauteil mindestens ein, zumindest gegenüber der axialen Richtung elastisch verformbares, Federelement angeordnet. Ein solches Federelement, z. B. ein Dichtelement zur Abdichtung der Verbindungsanordnung, z. B. ein O-Ring, ist zwischen dem ersten Bauteil und dem zweiten Bauteil bzw. zwischen zumindest einem dieser Bauteile und z. B. einem dritten Bauteil angeordnet.

Über das Federelement kann eine (leichte) Vorspannung in die Verbindungsanordnung eingebracht werden, so dass über das Federelement eine gegen den Formschluss entlang der axialen Richtung gerichtete Kraft bereitgestellt wird.

Insbesondere ist zumindest an dem ersten Bauteil oder an dem zweiten Bauteil (bevorzugt an beiden Bauteilen) mindestens ein Montageanschlag zur Positionierung des Verbindungsrings angeordnet. Insbesondere sind entlang der Umfangsrichtung eine Mehrzahl von Montageanschlägen angeordnet.

Insbesondere ist jedem Halteelement zumindest eines Bauteils jeweils ein Montageanschlag zugeordnet.

Der Montageanschlag kann eine korrekte Anordnung des Verbindungsrings an einem der Bauteile sicherstellen. Weiter kann der Montageanschlag eine verliersichere Anordnung des Verbindungsrings an zumindest einem der Bauteile, z. B. während der Montage, gewährleisten. Insbesondere dient der Montageanschlag dazu, dass der Verbindungsring zumindest an einem (z. B. dem ersten) Bauteil bereits vor der Verbindung mit dem anderen (z. B. dem zweiten) Bauteil in einer Endposition angeordnet ist. In diesem Fall ist das andere (z. B. zweite) Bauteil der Vormontageeinheit, umfassend zumindest ein (z. B. das erste) Bauteil und den Verbindungsring, zuzuführen und an dieser anzuordnen, so dass über den Verbindungsring die Verbindung zwischen erstem Bauteil und zweitem Bauteil hergestellt werden kann.

Insbesondere umfasst ein Sicherungsring den Verbindungsring in einer radialen Richtung außen. Der Sicherungsring stellt insbesondere sicher, dass sich der Verbindungsring nicht von den Halteelementen lösen kann.

Der Sicherungsring kann als eine Hülse ausgeführt sein, die entweder die gesamte Länge (Erstreckung entlang einer axialen Richtung) des Verbindungsrings überdeckt und damit die Verbindungen zwischen Verbindungsring und ersten Halteelementen als auch zwischen Verbindungsring und zweiten Halteelementen sichert, oder die nur einen Teil der Länge überdeckt und damit z. B. die Verbindungen nur der ersten oder nur der zweiten Halteelemente mit dem Verbindungsring sichert.

Der Sicherungsring kann auch als Elastomerring oder als den Verbindungsring umspannender Draht ausgeführt sein.

Nach einer ersten Alternative der Erfindung sind erste Halteelemente und zweite Halteelemente entlang der Umfangsrichtung einander jeweils gegenüberliegend angeordnet. Insbesondere sind jeweils Paare von Halteelementen (also jeweils ein erstes Halteelement und ein zweites Halteelement) entlang der Umfangsrichtung an jeweils gleichen Positionen der Umfangsrichtung angeordnet bzw. zumindest an einander überlappenden Positionen der Umfangsrichtung.

In dieser ersten Alternative der Erfindung weist der Verbindungsring entlang der Umfangsrichtung abwechselnd Spannabschnitte und Verbindungsabschnitte auf, wobei sich der Verbindungsring in jedem Spannabschnitt in der axialen Richtung über eine erste Länge und dabei zumindest über ein erstes Halteelement und ein zweites Halteelement erstreckt und in jedem Verbindungsabschnitt in der axialen Richtung über eine zweiten Länge erstreckt, wobei die zweite Länge kleiner ist als die erste Länge.

Insbesondere liegt zwischen dem Spannabschnitt und dem Verbindungsabschnitt eine sprunghafte Änderung der Länge, also der Erstreckung des Verbindungsrings entlang der axialen Richtung, vor.

Insbesondere kann über die Verbindungsabschnitte eine Biegesteifigkeit der Spannabschnitte bzw. eine Verformbarkeit der Spannabschnitte in der radialen Richtung, reduziert bzw. eingestellt werden.

Insbesondere bildet der Spannabschnitt eine Öffnung, in der ein erstes Halteelement und ein zweites Halteelement gemeinsam angeordnet sind. Dabei erstreckt sich der Spannabschnitt entlang der ersten und zweiten axialen Richtung und entlang der Umfangsrichtung über diese Halteelemente hinweg.

Insbesondere ist in zumindest einem Verbindungsabschnitt zumindest ein Einschnitt vorgesehen, durch den die zweite Länge lokal reduziert ist. Der Einschnitt ist insbesondere ein Spalt, der sich im Wesentlichen entlang der axialen Richtung ausgehend von einem Rand des Verbindungsrings im Verbindungsabschnitt erstreckt. Insbesondere ist ein weiterer Einschnitt ausgehend von dem gegenüberliegenden Rand vorgesehen, so dass die zweite Länge ausgehend von beiden Rändern reduziert ist.

Insbesondere ist der Einschnitt unmittelbar benachbart zum Spannabschnitt angeordnet. Bevorzugt sind Einschnitte hin zu beiden benachbarten Spannabschnitten oder an beiden zu einem Spannabschnitt benachbarten Verbindungsabschnitten vorgesehen.

Mit dem Einschnitt kann eine Biegesteifigkeit der Spannabschnitte bzw. eine Verformbarkeit der Spannabschnitte in der radialen Richtung weiter reduziert bzw. weiter eingestellt werden.

Die Ausführung eines Verbindungsrings ohne Einschnitte kann aber bevorzugt sein, da so die Herstellung des Verbindungsrings ggf. einfacher ist und eine bessere Schwingfestigkeit gewährleistet werden kann (es liegen keine Kerbspannungen vor).

Nach einer zweiten Alternative der Erfindung sind erste Halteelemente und zweite Halteelemente entlang der Umfangsrichtung jeweils versetzt zueinander angeordnet. Insbesondere sind erste Halteelemente und zweite Halteelemente entlang der Umfangsrichtung an voneinander unterschiedlichen Positionen angeordnet, so dass entlang der Umfangsrichtung erste Halteelemente wechselweise mit zweiten Halteelementen angeordnet sind.

In deser zweiten Alternative der Erfindung erstreckt sich der Verbindungsring entlang der Umfangsrichtung mäanderförmig, so dass sich der Verbindungsring zwischen einem ersten Haltelement und einem zweiten Halteelement sowohl entlang der Umfangsrichtung als auch entlang der axialen Richtung erstreckt. Insbesondere erstreckt sich der Verbindungsring also ausgehend z. B. von einem ersten Halteelement entlang der axialen Richtung hin zum zweiten Halteelement, dann entlang der Umfangsrichtung über das zweite Haltelement hinweg, dann zurück entlang der axialen Richtung hin zu einem anderen ersten Halteelement und dann weiter entlang der Umfangsrichtung über dieses erste Halteelement hinweg, und so weiter.

Insbesondere erstreckt sich der Verbindungsring am ersten Halteelement entlang der Umfangsrichtung über eine erste Breite und am zweiten Halteelement über eine zweite Breite, wobei die erste Breite und die zweite Breite voneinander unterschiedlich oder aber gleich groß sind. Insbesondere weisen die Halteelemente die unterschiedliche Breite auf, also die ersten Halteelemente die erste Breite und die zweiten Halteelemente die zweite Breite.

Eine gleiche Breite ist bevorzugt, da die gleichmäßige Anordnung eine einfache Ausrichtung und Montage des Verbindungsrings ermöglicht. Weiter kann über eine gleiche Breite eine gleichmäßige Spannungsverteilung entlang der Umfangsrichtung gewährleistet werden. Insbesondere sind die ersten Halteelemente als Vorsprünge an einer Umfangsfläche des ersten Bauteils und die zweiten Halteelemente als Vorsprünge an einer Umfangsfläche des zweiten Bauteils ausgeführt.

Vorsprünge erstrecken sich ausgehend von einer Umfangsfläche des jeweiligen Bauteils in der radialen Richtung nach außen. D. h. insbesondere, dass der Verbindungsring sich an der Umfangsfläche anlegt, während sich die Vorsprünge durch Aussparungen oder Öffnungen am Verbindungsring in der radialen Richtung nach außen erstrecken.

Bevorzugt sind die Vorsprünge als keilförmige Elemente mit Hinterschnitt ausgeführt. Insbesondere sind erste Halteelemente auf einer hin zu den zweiten Haltelementen orientierten Seite und zweite Halteelemente auf einer hin zu den ersten Halteelementen orientierten Seite keilförmig ausgeführt, so dass der Verbindungsring über den Keil hinweg auf die jeweils andere Seite des Halteelements geschoben werden kann. Die dafür erforderliche Auslenkung entlang der radialen Richtung wird über die eingestellte Biegesteifigkeit des Verbindungsrings ermöglicht.

Der Hinterschnitt ist insbesondere durch eine (im Wesentlichen) quer zur axialen Richtung verlaufende Fläche am Vorsprung gebildet.

Insbesondere ist der Verbindungsring aus einem Federstahl, einem Thermoplast oder aus einem thermoplastischen Elastomer ausgeführt.

Die metallische Ausführung des Verbindungsrings kann eine elektromagnetische Abstrahlung der Bauteile (wenn diese z. B. eine Pumpe bilden) reduzieren. Die metallische Ausführung hat gegenüber einer Ausführung aus Kunststoff den Vorteil einer höheren Festigkeit, einer besseren Alterungsbeständigkeit sowie ggf. einer Wiederverwendbarkeit nach Demontage.

Es wird weiter ein Verbindungsring für die beschriebene Verbindungsanordnung vorgeschlagen, wobei der Verbindungsring in einer Umfangsrichtung umlaufend geschlossen ausgebildet ist. Die Ausführungen zu der Verbindungsanordnung gelten insbesondere gleichermaßen für den Verbindungsring und umgekehrt.

Es wird weiter ein Verfahren zur Herstellung der beschriebenen Verbindungsanordnung vorgeschlagen, zumindest umfassend die folgenden Schritte:
a) Bereitstellen zumindest des ersten Bauteils, des zweiten Bauteils und des Verbindungsrings;
b) Aufschieben des Verbindungsrings entlang einer axialen Richtung auf das erste Bauteil;
c) Anordnen des zweiten Bauteils an dem ersten Bauteil;
d) Anordnen des Verbindungsrings an den Halteelementen und damit formschlüssiges Verbinden von erstem Bauteil und zweitem Bauteil.

Insbesondere kann vor oder nach Schritt b) (aber vor Schritt c)) ein drittes Bauteil bereitgestellt werden, dass zwischen dem ersten Bauteil und dem zweiten Bauteil angeordnet wird.

Insbesondere kann vor Schritt c) ein zumindest gegenüber der axialen Richtung elastisch verformbares Federelement an einem der Bauteile angeordnet werden. Ein solches Federelement, z. B. ein Dichtelement zur Abdichtung der Verbindungsanordnung, z. B. ein O-Ring, ist zwischen dem ersten Bauteil und dem zweiten Bauteil bzw. zwischen zumindest einem dieser Bauteile und z. B. einem dritten Bauteil angeordnet.

Die Ausführungen zu der Verbindungsanordnung und dem Verbindungsring gelten insbesondere gleichermaßen für das Verfahren und umgekehrt.

Ein Vorteil der vorgeschlagenen Clip-Verbindung der Bauteile über den Verbindungsring ist insbesondere die schnelle und einfache Montage der Fügeteile (also der Bauteile und des Verbindungsrings). Mit Hilfe des Verbindungsrings ist man zudem insbesondere unabhängig von den Werkstoffen der beiden Bauteile. Die Verbindung der Bauteile ist wiederholbar lösbar.

Bei einer metallischen Ausführung kann der Verbindungsring z. B. bei einer elektrischen (Wasser-)Pumpe helfen, die elektromagnetische Abstrahlung zu reduzieren. Der metallische Verbindungsring kann erneut verwendet werden. Die metallische Ausführung des Verbindungsring hat zudem gegenüber heutigen Clip-Verbindungen aus Kunststoff den Vorteil der höheren Festigkeit, der Alterungsbeständigkeit und der Wiederverwendbarkeit nach Demontage.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

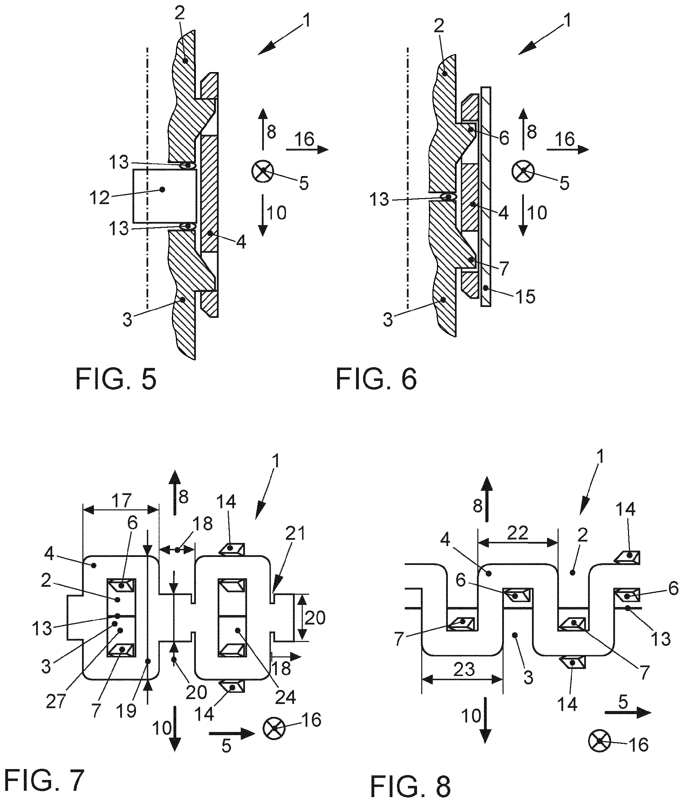

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Nur Figuren 7-9 zeigen anspruchsgemäße Ausführungsformen. Es zeigen:
- Fig. 1:: eine bekannte erste Ausführungsvariante einer Clip-Verbindung in einer Seitenansicht im Schnitt;
- Fig. 2:: eine bekannte zweite Ausführungsvariante einer Clip-Verbindung in einer Seitenansicht im Schnitt;
- Fig. 3:: eine erste Ausführungsvariante einer Verbindungsanordnung in einer Seitenansicht im Schnitt;
- Fig. 4:: eine zweite Ausführungsvariante einer Verbindungsanordnung in einer Seitenansicht im Schnitt;
- Fig. 5:: eine dritte Ausführungsvariante einer Verbindungsanordnung in einer Seitenansicht im Schnitt;
- Fig. 6:: eine vierte Ausführungsvariante einer Verbindungsanordnung in einer Seitenansicht im Schnitt;
- Fig. 7:: eine fünfte Ausführungsvariante einer Verbindungsanordnung in einer perspektivischen Ansicht;
- Fig. 8:: eine sechste Ausführungsvariante einer Verbindungsanordnung in einer perspektivischen Ansicht;
- Fig. 9:: die Verbindungsanordnung nach Fig. 8 in einer perspektivischen Ansicht;
- Fig. 10:: zwei unterschiedliche Ausführungsvarianten eines Verbindungsrings;
- Fig. 11:: eine siebte Ausführungsvariante einer Verbindungsanordnung in einer Seitenansicht im Schnitt; und
- Fig. 12:: eine weitere Ausführungsvariante eines Verbindungsrings in einer perspektivischen Ansicht.

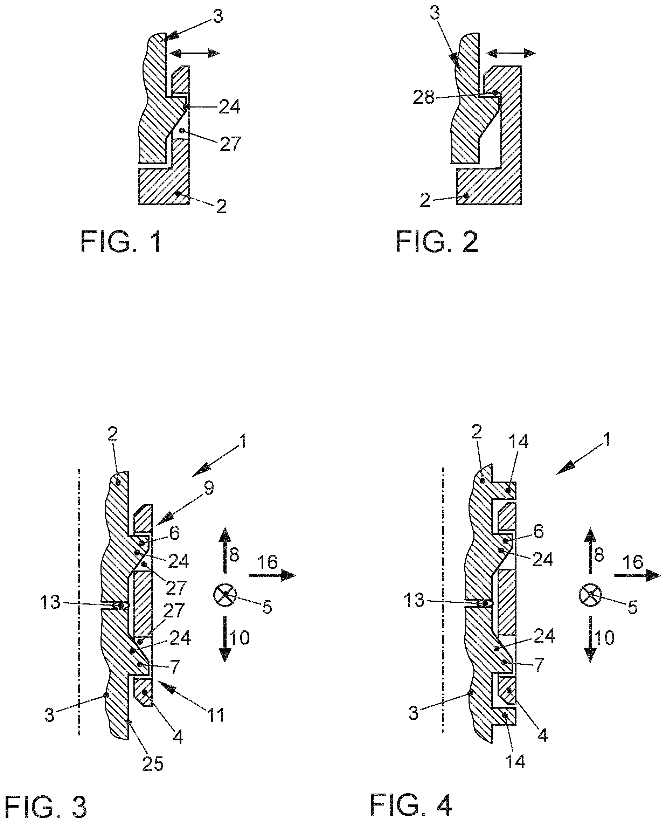

Die Fig. 1 zeigt eine bekannte erste Ausführungsvariante einer Clip-Verbindung in einer Seitenansicht im Schnitt. Fig. 2 zeigt eine bekannte zweite Ausführungsvariante einer Clip-Verbindung in einer Seitenansicht im Schnitt. Die Fig. 1 und 2 werden im Folgenden gemeinsam beschrieben.

Zur Herstellung der Clip-Verbindung ist es erforderlich, dass das erste Bauteil 2 aus einem dehnbaren Werkstoff besteht. Beim Fügen weicht das dehnbare erste Bauteil 2 z. B. durch das Auflaufen auf einen Keil (an einem Vorsprung 24 des zweiten Bauteils 3) aus und schnappt zum Ende der Montage hinter eine Kontur und realisiert einen Formschluss (Bewegung des ersten Bauteils 2 gemäß dargestellter Pfeile). In Fig. 2 weist das erste Bauteil 2 eine Öffnung 27 auf, in Fig. 3 einen Kragen 28.

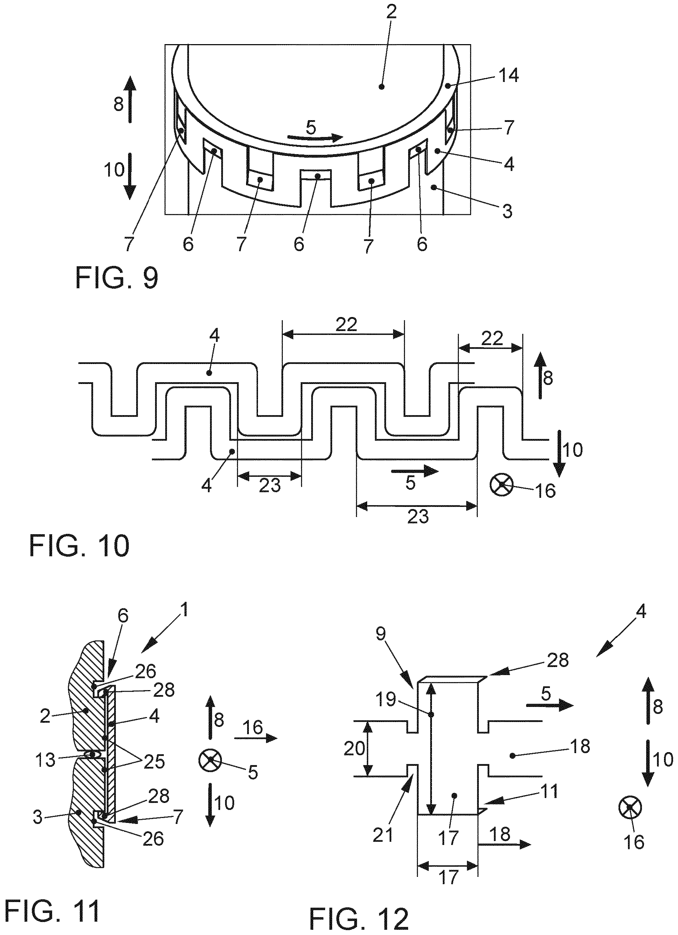

Fig. 3 zeigt eine erste Ausführungsvariante einer Verbindungsanordnung 1 in einer Seitenansicht im Schnitt. Die Verbindungsanordnung 1 umfasst ein erstes Bauteil 2 und ein zweites Bauteil 3 sowie einen Verbindungsring 4 zur Verbindung der Bauteile 2, 3. Der Verbindungsring 4 ist in einer Umfangsrichtung 5 umlaufend geschlossen ausgebildet und erstreckt sich um beide Bauteile 2, 3 herum (siehe Fig. 9). Am ersten Bauteil 2 ist entlang der Umfangsrichtung 5 eine Mehrzahl von ersten Halteelementen 6 und am zweiten Bauteil 3 entlang der Umfangsrichtung 5 eine Mehrzahl von zweiten Halteelementen 7 angeordnet. Der Verbindungsring 4 bildet mit den ersten Halteelementen 6 eine gegenüber einer ersten axialen Richtung 8 formschlüssige erste Verbindung 9 und mit den zweiten Halteelementen 7 eine gegenüber einer (der ersten axialen Richtung 8 entgegengesetzten) zweiten axialen Richtung 10 formschlüssige zweite Verbindung 11 aus.

Hier kann ein drittes, dehnbares Element (hier der Verbindungsring 4) die gewünschte ClipVerbindung realisieren. Der vorgeschlagene Verbindungsring 4 wird dabei auf beide Fügepartner (also beide Bauteile 2, 3) aufgeclipst und stellt somit die Verbindung der Bauteile 2, 3 her.

Zwischen dem ersten Bauteil 2 und dem zweiten Bauteil 3 ist ein, zumindest gegenüber der axialen Richtung 8, 10 elastisch verformbares, Federelement 13, hier ein O-Ring, angeordnet.

Die ersten Halteelemente 6 sind als Vorsprünge 24 an einer Umfangsfläche 25 des ersten Bauteils 2 und die zweiten Halteelemente 7 als Vorsprünge 24 an einer Umfangsfläche 25 des zweiten Bauteils 3 ausgeführt.

Die Vorsprünge 24 erstrecken sich ausgehend von einer Umfangsfläche 25 des jeweiligen Bauteils 2, 3 in der radialen Richtung 16 nach außen. Der Verbindungsring 4 legt sich an der Umfangsfläche 25 an, während sich die Vorsprünge 24 durch Aussparungen oder Öffnungen 27 am Verbindungsring 4 in der radialen Richtung 16 nach außen erstrecken.

Die Vorsprünge 24 sind als keilförmige Elemente mit Hinterschnitt ausgeführt. Erste Halteelemente 6 sind auf einer hin zu den zweiten Haltelementen 7 orientierten Seite und zweite Halteelemente 7 auf einer hin zu den ersten Halteelementen 6 orientierten Seite keilförmig ausgeführt, so dass der Verbindungsring 4 über den Keil hinweg auf die jeweils andere Seite des Halteelements 6, 7 geschoben werden kann. Die dafür erforderliche Auslenkung entlang der radialen Richtung 16 wird über die eingestellte Biegesteifigkeit des Verbindungsrings 4 ermöglicht.

Der Hinterschnitt ist durch eine quer zur axialen Richtung 8, 10 verlaufende Fläche am Vorsprung 24 (auf der dem jeweils anderen Halteelemente 6, 7 abgewandten Seite des Vorsprungs 24) gebildet.

Fig. 4 zeigt eine zweite Ausführungsvariante einer Verbindungsanordnung 1 in einer Seitenansicht im Schnitt. Auf die Ausführungen zu Fig. 3 wird verwiesen.

Im Unterschied zur ersten Ausführungsvariante sind an dem ersten Bauteil 2 und an dem zweiten Bauteil 3 Montageanschläge 14 zur Positionierung des Verbindungsrings 4 angeordnet.

Der Montageanschlag 14 kann eine korrekte und sichere Anordnung des Verbindungsrings 4 an den Bauteilen 2, 3 sicherstellen. Der Montageanschlag 14 kann Beschädigungen des Verbindungsrings 4 verhindern. Der Montageanschlag 14 dient u. a. dazu, dass der Verbindungsring 4 an zumindest einem Bauteil 2, 3 bereits vor der Verbindung mit dem anderen Bauteil 3, 2 in einer Endposition angeordnet ist.

Fig. 5 zeigt eine dritte Ausführungsvariante einer Verbindungsanordnung 1 in einer Seitenansicht im Schnitt. Auf die Ausführungen zu Fig. 3 und 4 wird verwiesen.

Im Unterschied zur ersten und zweiten Ausführungsvariante ist zwischen dem ersten Bauteil 2 und dem zweiten Bauteil 3 ein drittes Bauteil 12 angeordnet, wobei sich der Verbindungsring 4 entlang der axialen Richtung 8, 10 über das dritte Bauteil 12 hinweg erstreckt. Das erste Bauteil 2 und das zweite Bauteil 3 sind durch das dritte Bauteil 12 voneinander beabstandet angeordnet. Weiter sind Federelemente 13 zwischen dem ersten Bauteil 2 und dem dritten Bauteil 12 sowie zwischen dem zweiten Bauteil 3 und dem dritten Bauteil 12 vorgesehen.

Fig. 6 zeigt eine vierte Ausführungsvariante einer Verbindungsanordnung 1 in einer Seitenansicht im Schnitt. Auf die Ausführungen zu Fig. 3 bis 5 wird verwiesen.

Im Unterschied zur ersten, zweiten und dritten Ausführungsvariante ist ein Sicherungsring 15 vorgesehen, der den Verbindungsring 4 in einer radialen Richtung 16 außen umfasst. Der Sicherungsring 15 stellt sicher, dass sich der Verbindungsring 4 nicht von den Halteelementen 6, 7 lösen kann.

Der Sicherungsring 15 ist als eine Hülse ausgeführt, die die gesamte Länge (Erstreckung entlang einer axialen Richtung 8, 10) des Verbindungsrings 4 überdeckt und damit die ersten Verbindungen 9 zwischen Verbindungsring 4 und ersten Halteelementen 6 als auch die zweiten Verbindungen 11 zwischen Verbindungsring 4 und zweiten Halteelementen 7 sichert.

Fig. 7 zeigt eine fünfte Ausführungsvariante einer Verbindungsanordnung 1 in einer perspektivischen Ansicht. Auf die Ausführungen zu Fig. 3 bis 6 wird verwiesen.

Erste Halteelemente 6 und zweite Halteelemente 7 sind entlang der Umfangsrichtung 5 einander jeweils gegenüberliegend angeordnet. Es sind jeweils Paare von Halteelementen 6, 7 (also jeweils ein erstes Halteelement 6 und ein zweites Halteelement 7) entlang der Umfangsrichtung 5 an jeweils gleichen Positionen der Umfangsrichtung 5 angeordnet.

Der Verbindungsring 4 weist entlang der Umfangsrichtung 4 abwechselnd Spannabschnitte 17 und Verbindungsabschnitte 18 auf, wobei sich der Verbindungsring 4 in jedem Spannabschnitt 17 in der axialen Richtung 8, 10 über eine erste Länge 19 und dabei über ein erstes Halteelement 6 und ein zweites Halteelement 7 erstreckt und in jedem Verbindungsabschnitt 18 in der axialen Richtung 8, 10 über eine zweiten Länge 20 erstreckt, wobei die zweite Länge 20 kleiner ist als die erste Länge 19.

Zwischen dem Spannabschnitt 17 und dem Verbindungsabschnitt 18 liegt eine sprunghafte Änderung der Länge 19, 20, also der Erstreckung des Verbindungsrings 4 entlang der axialen Richtung 8, 10, vor.

Der Spannabschnitt 17 bildet eine Öffnung 27, in der ein erstes Halteelement 6 und ein zweites Halteelement 7 angeordnet sind. Dabei erstreckt sich der Spannabschnitt 17 (ausgehend von einer Fügeebene der Bauteile 2, 3) entlang der ersten axialen Richtung 8 und der zweiten axialen Richtung 10 und entlang der Umfangsrichtung 5 über diese Halteelemente 6, 7 hinweg.

In einem Verbindungsabschnitt 18 sind Einschnitte 21 vorgesehen, durch die die zweite Länge 20 lokal reduziert ist. Der Einschnitt 21 ist ein Spalt, der sich entlang der axialen Richtung 8, 10 ausgehend von einem Rand des Verbindungsrings 4 im Verbindungsabschnitt 18 erstreckt. Hier ist ein weiterer Einschnitt 21 ausgehend von dem gegenüberliegenden Rand vorgesehen, so dass die zweite Länge 20 ausgehend von beiden Rändern reduziert ist.

Die Einschnitte 21 sind unmittelbar benachbart zum Spannabschnitt 17 angeordnet. Hier sind an beiden Seiten eines Spannabschnitts 17 Einschnitte 21 in den jeweils benachbarten Verbindungsabschnitten 18 angeordnet.

Zumindest im Bereich des einen Spannabschnitts 17 sind an dem ersten Bauteil 2 und an dem zweiten Bauteil 3 Montageanschläge 14 zur Positionierung des Verbindungsrings 4 angeordnet.

Fig. 8 zeigt eine sechste Ausführungsvariante einer Verbindungsanordnung 1 in einer perspektivischen Ansicht. Fig. 9 zeigt die Verbindungsanordnung 1 nach Fig. 8 in einer perspektivischen Ansicht. Die Fig. 8 und 9 werden im Folgenden gemeinsam beschrieben. Auf die Ausführungen zu Fig. 3 bis 7 wird verwiesen.

Im Unterschied zur fünften Ausführungsvariante sind erste Halteelemente 6 und zweite Halteelemente 7 entlang der Umfangsrichtung 5 jeweils versetzt zueinander angeordnet. Erste Halteelemente 6 und zweite Halteelemente 7 sind entlang der Umfangsrichtung 5 an voneinander unterschiedlichen Positionen angeordnet, so dass entlang der Umfangsrichtung 5 erste Halteelemente 6 wechselweise mit zweiten Halteelementen 7 angeordnet sind.

Der Verbindungsring 4 erstreckt sich entlang der Umfangsrichtung 5 mäanderförmig, so dass sich der Verbindungsring 4 zwischen einem ersten Haltelement 6 und einem zweiten Halteelement 7 sowohl entlang der Umfangsrichtung 5 als auch entlang der axialen Richtung 8, 10 erstreckt.

Der Verbindungsring 4 erstreckt sich am ersten Halteelement 6 entlang der Umfangsrichtung 5 über eine erste Breite 22 und am zweiten Halteelement 7 über eine zweite Breite 23, wobei die erste Breite 22 und die zweite Breite 23 gleich groß sind.

Erkennbar sind die Körper 2, 3 zylindrisch geformt.

Fig. 10 zeigt zwei unterschiedliche Ausführungsvarianten eines Verbindungsrings 1. Die dargestellten Verbindungsringe 4 erstrecken sich am ersten Halteelement 6 entlang der Umfangsrichtung 5 über eine erste Breite 22 und am zweiten Halteelement 7 über eine zweite Breite 23, wobei die erste Breite 22 und die zweite Breite 23 unterschiedlich groß sind.

Bei dem oberen Verbindungsring 4 ist die erste Breite 22 größer, bei dem unteren Verbindungsring 4 die zweite Breite 23.

Fig. 11 zeigt eine siebte Ausführungsvariante einer Verbindungsanordnung 1 in einer Seitenansicht im Schnitt. Auf die Ausführungen zu Fig. 3 bis 6 wird verwiesen.

Die ersten Halteelemente 6 sind als Rücksprünge 26 an einer Umfangsfläche 25 des ersten Bauteils 2 und die zweiten Halteelemente 7 als Rücksprünge 26 an einer Umfangsfläche 25 des zweiten Bauteils 3 ausgeführt. Die Rücksprünge 26 erstrecken sich ausgehend von einer Umfangsfläche 25 des jeweiligen Bauteils 2, 3 in der radialen Richtung 16 nach innen. Der Verbindungsring 4 legt sich an der Umfangsfläche 25 an und ragt mit einem Kragen 28 in die Rücksprünge 26 hinein.

Fig. 12 zeigt eine achte Ausführungsvariante eines Verbindungsrings 4 in einer perspektivischen Ansicht. Auf die Ausführungen zu Fig. 7 und 11 wird verwiesen.

Der Verbindungsring 4 weist entlang der Umfangsrichtung 4 abwechselnd Spannabschnitte 17 und Verbindungsabschnitte 18 auf, wobei sich der Verbindungsring 4 in jedem Spannabschnitt 17 in der axialen Richtung 8, 10 über eine erste Länge 19 und dabei über ein erstes Halteelement 6 und ein zweites Halteelement 7 erstreckt und in jedem Verbindungsabschnitt 18 in der axialen Richtung 8, 10 über eine zweiten Länge 20 erstreckt, wobei die zweite Länge 20 kleiner ist als die erste Länge 19.

Zwischen dem Spannabschnitt 17 und dem Verbindungsabschnitt 18 liegt eine sprunghafte Änderung der Länge 19, 20, also der Erstreckung des Verbindungsrings 4 entlang der axialen Richtung 8, 10, vor.

Der Spannabschnitt 17 erstreckt sich entlang der axialen Richtung 8, 10 über ein erstes Halteelement 6 und ein zweites Halteelement 7 hinweg und bildet mit Kragen 28 die Verbindungen 9, 11. Der Spannabschnitt 17 erstreckt sich ggf. entlang der Umfangsrichtung 5 ebenfalls über die Halteelemente 6, 7 hinweg.

In einem Verbindungsabschnitt 18 sind Einschnitte 21 vorgesehen, durch die die zweite Länge 20 lokal reduziert ist. Hier ist ein weiterer Einschnitt 21 ausgehend von dem gegenüberliegenden Rand vorgesehen, so dass die zweite Länge 20 ausgehend von beiden Rändern reduziert ist.

### Bezugszeichenliste

- 1: Verbindungsanordnung
- 2: erstes Bauteil
- 3: zweites Bauteil
- 4: Verbindungsring
- 5: Umfangsrichtung
- 6: erstes Halteelement
- 7: zweites Halteelement
- 8: erste axiale Richtung
- 9: erste Verbindung
- 10: zweite axiale Richtung
- 11: zweite Verbindung
- 12: drittes Bauteil
- 13: Federelement
- 14: Montageanschlag
- 15: Sicherungsring
- 16: radiale Richtung
- 17: Spannabschnitt
- 18: Verbindungsabschnitt
- 19: erste Länge
- 20: zweite Länge
- 21: Einschnitt
- 22: erste Breite
- 23: zweite Breite
- 24: Vorsprung
- 25: Umfangsfläche
- 26: Rücksprung
- 27: Öffnung
- 28: Kragen

## Patentansprüche

1. Verbindungsanordnung (1), zumindest umfassend ein erstes Bauteil (2) und ein zweites Bauteil (3) sowie einen Verbindungsring (4) zur Verbindung der Bauteile (2, 3), wobei der Verbindungsring (4) in einer Umfangsrichtung (5) umlaufend geschlossen ausgebildet ist und sich um beide Bauteile (2, 3) herum erstreckt, wobei am ersten Bauteil (2) entlang der Umfangsrichtung (5) eine Mehrzahl von ersten Halteelementen (6) und am zweiten Bauteil (3) entlang der Umfangsrichtung (5) eine Mehrzahl von zweiten Halteelementen (7) angeordnet sind, wobei der Verbindungsring (4) mit den ersten Halteelementen (6) eine gegenüber einer ersten axialen Richtung (8) formschlüssige erste Verbindung (9) und mit den zweiten Halteelementen (7) eine gegenüber einer zweiten axialen Richtung (10) formschlüssige zweite Verbindung (11) ausbildet; wobei die ersten Halteelemente (6) als Vorsprünge (24) an einer Umfangsfläche (25) des ersten Bauteils (2) und die zweiten Halteelemente (7) als Vorsprünge (24) an einer Umfangsfläche (25) des zweiten Bauteils (3) ausgeführt sind; **dadurch gekennzeichnet, dass**
- erste Halteelemente (6) und zweite Halteelemente (7) entlang der Umfangsrichtung (5) einander jeweils gegenüberliegend angeordnet sind und der Verbindungsring (4) entlang der Umfangsrichtung (5) abwechselnd Spannabschnitte (17) und Verbindungsabschnitte (18) aufweist, wobei sich der Verbindungsring (4) in jedem Spannabschnitt (17) in der axialen Richtung (8, 10) über eine erste Länge (19) und dabei zumindest über ein erstes Halteelement (6) und ein zweites Halteelement (7) erstreckt und in jedem Verbindungsabschnitt (18) in der axialen Richtung (8, 10) über eine zweite Länge (20) erstreckt, wobei die zweite Länge (20) kleiner ist als die erste Länge (19); oder
- erste Halteelemente (6) und zweite Halteelemente (7) entlang der Umfangsrichtung (5) jeweils versetzt zueinander angeordnet sind und sich der Verbindungsring (4) entlang der Umfangsrichtung (5) mäanderförmig erstreckt, so dass sich der Verbindungsring (4) zwischen einem ersten Haltelement (6) und einem zweiten Halteelement (7) sowohl entlang der Umfangsrichtung (5) als auch entlang der axialen Richtung (8, 10) erstreckt.

2. Verbindungsanordnung (1) nach Patentanspruch 1, wobei zwischen dem ersten Bauteil (2) und dem zweiten Bauteil (3) zumindest ein drittes Bauteil (12) angeordnet ist, wobei sich der Verbindungsring (4) entlang der axialen Richtung (8, 10) über das dritte Bauteil (12) hinweg erstreckt.

3. Verbindungsanordnung (1) nach einem der vorhergehenden Patentansprüche, wobei zwischen dem ersten Bauteil (2) und dem zweiten Bauteil (3) mindestens ein, zumindest gegenüber der axialen Richtung (8, 10) elastisch verformbares, Federelement (13) angeordnet ist.

4. Verbindungsanordnung (1) nach einem der vorhergehenden Patentansprüche, wobei zumindest an dem ersten Bauteil (2) oder an dem zweiten Bauteil (3) mindestens ein Montageanschlag (14) zur Positionierung des Verbindungsrings (4) angeordnet ist.

5. Verbindungsanordnung (1) nach einem der vorhergehenden Patentansprüche, wobei ein Sicherungsring (15) den Verbindungsring (4) in einer radialen Richtung (16) außen umfasst.

6. Verbindungsanordnung (1) nach einem der vorhergehenden Patentansprüche, wobei, wenn die ersten Halteelemente (6) und die zweiten Halteelemente (7) entlang der Umfangsrichtung (5) einander jeweils gegenüberliegend angeordnet sind, in zumindest einem Verbindungsabschnitt (18) zumindest ein Einschnitt (21) vorgesehen ist, durch den die zweite Länge (20) lokal reduziert ist.

7. Verbindungsanordnung (1) nach einem der vorhergehenden Patentansprüche, wobei, wenn erste Halteelemente (6) und zweite Halteelemente (7) entlang der Umfangsrichtung (5) jeweils versetzt zueinander angeordnet sind, sich der Verbindungsring (4) am ersten Halteelement (6) entlang der Umfangsrichtung (5) über eine erste Breite (22) und am zweiten Halteelement (7) über eine zweite Breite (23) erstreckt, wobei die erste Breite (22) und die zweite Breite (23) voneinander unterschiedlich sind.

8. Verbindungsanordnung (1) nach einem der vorhergehenden Patentansprüche, wobei der Verbindungsring (4) aus einem Federstahl, einem Thermoplast oder aus einem thermoplastischen Elastomer ausgeführt ist.

9. Verfahren zur Herstellung einer Verbindungsanordnung (1) nach einem der vorhergehenden Patentansprüche, zumindest umfassend die folgenden Schritte:
a) Bereitstellen zumindest des ersten Bauteils (2), des zweiten Bauteils (3) und des Verbindungsrings (4);
b) Aufschieben des Verbindungsrings (4) entlang einer axialen Richtung (8, 10) auf das erste Bauteil (2);
c) Anordnen des zweiten Bauteils (3) an dem ersten Bauteil (2);
d) Anordnen des Verbindungsrings (4) an den Halteelementen (6, 7) und damit formschlüssiges Verbinden von erstem Bauteil (2) und zweitem Bauteil (3).

## Claims

1. Connecting arrangement (1), at least comprising a first component (2) and a second component (3) and a connecting ring (4) for connecting the components (2, 3), the connecting ring (4) being designed to be circumferentially closed in a circumferential direction (5) and extending around both components (2, 3), a plurality of first holding elements (6) being arranged on the first component (2) along the circumferential direction (5) and a plurality of second holding elements (7) being arranged on the second component (3) along the circumferential direction (5), the connecting ring (4) forming a first form-fitting connection (9) to the first holding elements (6) with respect to a first axial direction (8) and a second form-fitting connection (11) to the second holding elements (7) with respect to a second axial direction (10); the first holding elements (6) being designed as protrusions (24) on a circumferential surface (25) of the first component (2) and the second holding elements (7) being designed as protrusions (24) on a circumferential surface (25) of the second component (3); **characterized in that**
- first holding elements (6) and second holding elements (7) are each arranged opposite one another along the circumferential direction (5) and the connecting ring (4) has alternating clamping portions (17) and connecting portions (18) along the circumferential direction (5), the connecting ring (4) extending in each clamping portion (17) in the axial direction (8, 10) over a first length (19) and thereby at least over a first holding element (6) and a second holding element (7) and extending in each connecting portion (18) in the axial direction (8, 10) over a second length (20), the second length (20) being smaller than the first length (19); or
- first holding elements (6) and second holding elements (7) are each arranged offset from one another along the circumferential direction (5) and the connecting ring (4) extends in a meandering manner along the circumferential direction (5), so that the connecting ring (4) extends between a first holding element (6) and a second holding element (7) both along the circumferential direction (5) and along the axial direction (8, 10).

2. Connecting arrangement (1) according to claim 1, wherein at least a third component (12) is arranged between the first component (2) and the second component (3), wherein the connecting ring (4) extends along the axial direction (8, 10) over the third component (12).

3. Connecting arrangement (1) according to either of the preceding claims, wherein at least one spring element (13) which is elastically deformable at least with respect to the axial direction (8, 10) is arranged between the first component (2) and the second component (3).

4. Connecting arrangement (1) according to any of the preceding claims, wherein at least one assembly stop (14) for positioning the connecting ring (4) is arranged at least on the first component (2) or on the second component (3).

5. Connecting arrangement (1) according to any of the preceding claims, wherein a retaining ring (15) encompasses the connecting ring (4) in a radial direction (16) on the outside.

6. Connecting arrangement (1) according to any of the preceding claims, wherein, when the first holding elements (6) and the second holding elements (7) are each arranged opposite one another along the circumferential direction (5), at least one incision (21) is provided in at least one connecting portion (18), by means of which incision the second length (20) is locally reduced.

7. Connecting arrangement (1) according to any of the preceding claims, wherein, when first holding elements (6) and second holding elements (7) are each arranged offset from one another along the circumferential direction (5), the connecting ring (4) extends on the first holding element (6) along the circumferential direction (5) over a first width (22) and on the second holding element (7) over a second width (23), wherein the first width (22) and the second width (23) are different from one another.

8. Connecting arrangement (1) according to any of the preceding claims, wherein the connecting ring (4) is made of a spring steel, a thermoplastic or a thermoplastic elastomer.

9. Method for producing a connecting arrangement (1) according to any of the preceding claims, at least comprising the steps of:
a) providing at least the first component (2), the second component (3) and the connecting ring (4);
b) sliding the connecting ring (4) along an axial direction (8, 10) onto the first component (2);
c) arranging the second component (3) on the first component (2);
d) arranging the connecting ring (4) on the holding elements (6, 7) and thus form-fittingly connecting the first component (2) and the second component (3).

## Revendications

1. Agencement de liaison (1), comprenant au moins un premier composant (2) et un deuxième composant (3) ainsi qu'un anneau de liaison (4) pour la liaison des composants (2, 3), dans lequel l'anneau de liaison (4) est réalisé fermé sur son pourtour dans une direction périphérique (5) et s'étend autour des deux composants (2, 3), dans lequel une pluralité de premiers éléments de retenue (6) sont disposés sur le premier composant (2) le long de la direction périphérique (5) et une pluralité de seconds éléments de retenue (7) sont disposés sur le deuxième composant (3) le long de la direction périphérique (5), dans lequel l'anneau de liaison (4) forme avec les premiers éléments de retenue (6) une première liaison (9) par complémentarité de forme par rapport à une première direction axiale (8) et avec les seconds éléments de retenue (7) une seconde liaison (11) par complémentarité de forme par rapport à une seconde direction axiale (10) ; dans lequel les premiers éléments de retenue (6) sont réalisés sous forme de saillies (24) sur une surface périphérique (25) du premier composant (2) et les seconds éléments de retenue (7) sont réalisés sous forme de saillies (24) sur une surface périphérique (25) du deuxième composant (3) ; **caractérisé en ce que**
- des premiers éléments de retenue (6) et des seconds éléments de retenue (7) sont disposés respectivement en face les uns des autres le long de la direction périphérique (5) et l'anneau de liaison (4) présente le long de la direction périphérique (5) alternativement des sections de serrage (17) et des sections de liaison (18), dans lequel l'anneau de liaison (4) s'étend dans chaque section de serrage (17) dans la direction axiale (8, 10) sur une première longueur (19) et s'étend ainsi au moins sur un premier élément de retenue (6) et un second élément de retenue (7) et s'étend dans chaque section de liaison (18) dans la direction axiale (8, 10) sur une seconde longueur (20), dans lequel la seconde longueur (20) est inférieure à la première longueur (19) ; ou
- des premiers éléments de retenue (6) et des seconds éléments de retenue (7) sont respectivement disposés de manière décalée les uns par rapport aux autres le long de la direction périphérique (5) et l'anneau de liaison (4) s'étend en forme de méandres le long de la direction périphérique (5), en sorte que l'anneau de liaison (4) s'étend entre un premier élément de retenue (6) et un second élément de retenue (7) à la fois le long de la direction périphérique (5) et le long de la direction axiale (8, 10).

2. Agencement de liaison (1) selon la revendication 1, dans lequel au moins un troisième composant (12) est disposé entre le premier composant (2) et le deuxième composant (3), dans lequel l'anneau de liaison (4) s'étend le long de la direction axiale (8, 10) au-delà du troisième composant (12).

3. Agencement de liaison (1) selon l'une des revendications précédentes, dans lequel au moins un élément élastique (13), déformable élastiquement au moins par rapport à la direction axiale (8, 10), est disposé entre le premier composant (2) et le deuxième composant (3).

4. Agencement de liaison (1) selon l'une des revendications précédentes, dans lequel au moins une butée de montage (14) est disposée au moins sur le premier composant (2) ou sur le deuxième composant (3) pour le positionnement de l'anneau de liaison (4).

5. Agencement de liaison (1) selon l'une des revendications précédentes, dans lequel un anneau de blocage (15) entoure extérieurement l'anneau de liaison (4) dans une direction radiale (16).

6. Agencement de liaison (1) selon l'une des revendications précédentes, dans lequel, lorsque les premiers éléments de retenue (6) et les seconds éléments de retenue (7) sont disposés respectivement en face les uns des autres le long de la direction périphérique (5), il est prévu, dans au moins une section de liaison (18), au moins une encoche (21), grâce à laquelle la seconde longueur (20) est réduite localement.

7. Agencement de liaison (1) selon l'une des revendications précédentes, dans lequel, lorsque des premiers éléments de retenue (6) et des seconds éléments de retenue (7) sont respectivement disposés de manière décalée les uns par rapport aux autres le long de la direction périphérique (5), l'anneau de liaison (4) s'étend le long de la direction périphérique (5) sur une première largeur (22) au niveau du premier élément de retenue (6) et sur une seconde largeur (23) au niveau du second élément de retenue (7), dans lequel la première largeur (22) et la seconde largeur (23) sont différentes l'une de l'autre.

8. Agencement de liaison (1) selon l'une des revendications précédentes, dans lequel l'anneau de liaison (4) est réalisé en un acier à ressort, en un thermoplastique ou en un élastomère thermoplastique.

9. Procédé pour la fabrication d'un agencement de liaison (1) selon l'une des revendications précédentes, comprenant au moins les étapes suivantes :
a) fourniture au moins du premier composant (2), du deuxième composant (3) et de l'anneau de liaison (4) ;
b) enfilage de l'anneau de liaison (4) le long d'une direction axiale (8, 10) sur le premier composant (2) ;
c) agencement du deuxième composant (3) sur le premier composant (2) ;
d) agencement de l'anneau de liaison (4) sur les éléments de retenue (6, 7) et liaison ainsi par complémentarité de forme du premier composant (2) et du deuxième composant (3).
